# EUROPEAN PATENT SPECIFICATION

(11) **EP 4 010 303 B1**
(45) Date of publication and mention of the grant of the patent: **21.06.2023**
(21) Application number: 20742154.6
(22) Date of filing: 09.06.2020
(51) Int. Cl.: C04B 41/68

(54) **COMPOUND FOR REINFORCING SURFACE TREATMENT**
VERBINDUNG ZUR VERSTÄRKENDEN OBERFLÄCHENBEHANDLUNG
COMPOSÉ DE RENFORCEMENT DE SURFACE

(30) Priority: 06.08.2019 CZ 20190508
(43) Date of publication of application: 15.06.2022
(73) Proprietor: First Point A.S., 69501 Hodonín (CZ)
(72) Inventor: CHLANDOVÁ, Gabriela, 51724 Borohrádek (CZ); SPANIEL, Petr, 51771 Ceské Mezirící (CZ)
(74) Representative: Skoda, Milan
(86) International application number: PCT/CZ2020/000024
(87) International publication number: WO 2021/023318

(56) References cited:
- DATABASE WPI Week 199831 Thomson Scientific, London, GB; AN 1998-357334 XP002800042, & JP H10 139568 A (MITSUBISHI CHEM CO LTD) 26 May 1998 (1998-05-26)

## Description

### Technical Field

The invention relates to a compound for the reinforcing of surfaces, in particular to a compound for the waterproof reinforcing of concrete surfaces which contains water glass.

### State of the Art

From existing technology it is known that concrete is a composite material which is made up of binder, filler, water, and admixtures. The most common sort of concrete is cement concrete where the binder is cement and the filler is aggregate. A further most used type of cement is asphalt concrete. The character and uses of cement are influenced by the type of filler as well as binder, for example for heat resistant cement, cement with a larger portion of aluminates is used.

To improve its mechanical properties iron reinforcements, cables, wires, various fibres eg. carbon or glass are added to concrete. As well, lightened concrete is produced with a porous structure, with the admixture being fly ash from coal combustion.

The main problem of durability of concrete structures is the ongoing alkaline - silica reaction. It is a set of undesirable events between a concrete solution containing sodium and potassium oxides with an alkaline character, hydroxide ions from calcium hydroxide and silica, which form both natural and man-made aggregates for concrete. Silica dissolves and degrades under the influence of hydrophilic hydroxide ions from cement and metal cations present and subsequently forms a hygroscopic porous gel from polymetal silicates mCaO.nSiO₂.pH₂O, mCaO.nAl₂O₃.p H₂O, mCaO.nFe₂O₃.pH₂O etc., which is capable in damp environments to adsorb water and swell. This causes stress in the concrete, which leads to the formation of a light coating of alkali-silicate gel on the surface, cracks, surface flaking, crumbling and overall disintegration of the concrete.

A number of methods are used to extend the durability of concrete and to reduce corrosion. For example, concrete reinforcing agents can be used which prevent moisture from penetrating the concrete and thus causing a chemical reaction between the alkalis in the concrete, the silica in the aggregate and the water, which are based on water glass. Some use ordinary sodium or potassium water glasses. However, they are completely unsuitable, because sodium and potassium cations, quite the opposite, are involved in the formation of the hygroscopic gel and accelerate its formation. In addition, sodium and potassium cations are large and cannot penetrate evenly into the sealed surface. This imbalance of gel formation and internal pressures intensifies the whole decomposition process. Sodium and potassium hardeners are highly soluble in water and absorb it, so that the alkali-silica reaction is again accelerated.

Among other used concrete preservatives can be listed alkoxysilanes. These are transparent hydrophobic preparations that prevent the penetration of water and chlorides into the concrete. This eliminates corrosion of the concrete. Examples are methyltrimethoxysilane, propyltrimethoxysilane, dodecyltrimethoxysilane, and similar compounds derived from ethoxysilane and the like.

From patent document RU2544854 a thermal insulating coating for plasters and concretes is known, which contains a styrene acrylate dispersion, diethylene glycol and white spirit, the compound is highly flammable and toxic, and non-ecological. The disadvantage is that the coating is not waterproof and is therefore not usable for exteriors. It forms
a thin film on the concrete surface and does not work to a depth.From a further patent document CN109321074 is known a waterproof coating for building materials which contains a small amount of water glass, while the main component of it is toxic acrylonitrile. The disadvantage of this coating is that it is of organic character, it is thermally unstable, and it is not ecological. It forms a thin film on the concrete surface and does not work to a depth.

An epoxy coating for the treatment of concrete against water is known from patent document KR101783331. This coating only acts as a surface film, which does not strengthen the concrete in depth and also does not prevent the alkali-silica reaction.

The known coating for concrete based on sodium and potassium glass is known from the patent application CZ PV 1991-2211. As mentioned above, sodium and potassium glasses are not suitable for concrete coatings because the sodium and potassium atoms are large and cannot penetrate into the concrete structure and inhibit the destructive processes.

From a further patent document KR100820276 is known a compound of potassium and lithium silicate. The disadvantage of this compound is that boric acid is present, which is toxic.

From patent document KR100982229 a compound is known which contains sodium silicate and potassium silicate. This compound further contains up to 10 wt% % of lithium compounds. This coating is very ineffective.

From patent application CZ PV 1996-3066 is known a coating for concrete roofing, or as the case may be metals and glass, which contains silicon oxide in a significantly predominant amount, as well as sodium oxide, lithium, potassium and other oxides, mainly aluminium and pigments. As fillers, layered silicates and mica are used, and it is possible to add slag, sand, etc. The disadvantage of this coating is that it acts only on the surface of the treated material.

From the patent application CZ PV 2000-2127 a compound is known for the formation of a waterproof film for cement systems, wood and tiles. This is a compound of lime, sucrose or glycerol and sodium metasilicate in water. The disadvantage is the short service life of the protective layer thus formed.

From the aforementioned current technology it is clear that main disadvantage of known current technology is that the known means for treating the surface of concrete do not protect the concrete, and often on the contrary cause its destruction. Another disadvantage is that the known compositions have a relatively short service life.

The object of the invention is to provide a concrete treatment compound which will act not only on the surface but inside the concrete structure as well, while significantly extending the service life of the treated concrete structure.

### Principle of the Invention

The above-mentioned disadvantages are largely eliminated and the objects of the invention are fulfilled by a compound for reinforcing surface treatment, in particular a compound for waterproof reinforcing surface treatment of concrete containing water glass, which according to the invention is characterised by that it contains 1 to 10 wt%. of bis (γ-triethoxysilylpropyl) tetrasulphide, 89.9 to 98 wt% of an aqueous solution of lithium silicate, and 0.1 to 1 wt% water glass stabiliser. The advantage of this compound is that it protects not only the concrete surface but also its internal structure for a long time. To great advantage is the use of a silane, which is most preferably bis (γ-triethoxysilylpropyl) tetrasulphide. In addition to its hydrophobising function, this organic sulphide in combination with lithium water glass forms a bridge between the concrete substrate and the water glass. Each molecule simultaneously reacts with both concrete and water glass particles. The advantage is that bis (γ-triethoxysilylpropyl) tetrasulphide is a difunctional molecule that contains two types of reactive functional groups. The tetrasulphide group is a chain of four sulphur atoms. The so-called the disulphide bonds between the four sulphur atoms decompose and the metal cations (lithium) bind to the free sulphur atoms to form thiolates. Triethoxysilyl groups are sensitive to hydrolysis, hydrolysed siloxy groups bind to silica particles, resulting in cross-linking. This additive fundamentally changes the overall behaviour of the lithium water glass itself. It increases its interconnection with the concrete and fills the porous surface structure of the concrete well. A flexible solid impermeable film is formed on the concrete surface. The concrete gains lustre but is non-slip. The glossy surface reflects light well and thus increases the effect of lighting in the room and at the same time improves the overall appearance of the floor.

To advantage, the water glass stabilisers are hydrophilic alkoxy alkyl-ammonium salts.

It is to advantage that the aqueous solution of lithium silicate has a molar ratio of SiO₂ and Li₂O in the range of 3.5 to 4.5.

The main advantage of the compound according to the invention is that it contains lithium water glass, which prevents practically all retardation processes that take place in concrete. It prevents the alkali - silica reaction, carbonation and sulphation as well as biological attack and leaching with soft water. At the same time, after hardening, it reinforces the material and, thanks to its low viscosity, penetrates into the joints of the concrete and prevents the penetration of water. At the same time, it is vapour permeable and allows evaporation of residual water from the concrete.

### Examples of the Performance of the Invention

### Example 1

The compound for waterproof reinforcing treatment of concrete surfaces contains 1.3 wt% of bis (γ-triethoxysilylpropyl) tetrasulphide, 97.8 wt% of an aqueous solution of lithium silicate, and 0.9 wt% water glass stabiliser.

The water glass stabilisers are hydrophilic alkoxy alkyl-ammonium salts, in the form of a 98% aqueous solution of N, N, N ', N'-Tetrakis (2-hydroxypropyl) ethylenediamine.

The aqueous lithium silicate solution has a molar ratio of SiO₂ and Li₂O of 3.5.

The resulting compound is poured onto the concrete surface.

### Example 2

The compound for waterproof reinforcing treatment of concrete surfaces contains 1 wt% of bis (γ-triethoxysilylpropyl) tetrasulphide, 98 wt% of an aqueous solution of lithium silicate, and 1 wt% water glass stabiliser.

The water glass stabilisers are hydrophilic alkoxy alkyl-ammonium salts, in the form of a 98% aqueous solution of N, N, N ', N'-Tetrakis (2-hydroxypropyl) ethylenediamine.

The aqueous lithium silicate solution has a molar ratio of SiO₂ and Li₂O of 4.5.

The resulting compound is poured onto the concrete surface.

### Example 3

The compound for waterproof reinforcing treatment of concrete surfaces contains 10 wt% of bis (γ-triethoxysilylpropyl) tetrasulphide, 89.9 wt% of an aqueous solution of lithium silicate, and 0.1 wt% water glass stabiliser.

The water glass stabilisers are hydrophilic alkoxy alkyl-ammonium salts, in the form of a 98% aqueous solution of N, N, N ', N'-Tetrakis (2-hydroxypropyl) ethylenediamine.

The aqueous lithium silicate solution has a molar ratio of SiO₂ and Li₂O of 4.03. The resulting compound is poured onto the concrete surface.

### Industrial Application

The compound for reinforcing surface treatment can particularly be used for waterproof reinforcing surface treatment of concrete, but also for any surface treatment, especially building materials containing calcium.

## Claims

1. A compound for reinforcing surface treatment, in particular a compound for waterproof reinforcing surface treatment of concrete containing water glass, **characterized in that** it contains 1 to 10 wt% of bis (γ-triethoxysilylpropyl) tetrasulphide, 89.9 to 98 wt% of an aqueous solution of lithium silicate, and 0.1 to 1 wt% water glass stabiliser.

2. The compound for reinforcing surface treatment, according to claim 1, **characterized in that** the water glass stabilisers are hydrophilic alkoxy alkyl-ammonium salts.

3. The compound for reinforcing surface treatment according to one of the preceding claims, **characterized in that** the aqueous solution of lithium silicate has a molar ratio of SiO₂ and Li₂O in the range from 3.5 to 4.5.

## Patentansprüche

1. Gemisch für die festigende Oberflächenbehandlung, insbesondere Gemisch für die wasserbeständige befestigende Oberflächenbehandlung von Betonen, das Wasserglas enthält, **dadurch gekennzeichnet, dass** es 1 bis 10 Volumenprozent des Bis-(γ-triethoxysilylpropyl)-tetrasulphids, 89,9 bis 98 Volumenprozent der wässrigen Lösung des Lithiumsilicats und 0,1 bis 1 Volumenprozent eines Wasserglasstabilisators enthält.

2. Gemisch für die festigende Oberflächenbehandlung, gemäß dem Anspruch 1, **dadurch gekennzeichnet, dass** der Wasserglasstabilisator hydrophile alkoxyle Alkylamoniumsalze sind.

3. Gemisch für die festigende Oberflächenbehandlung, gemäß einem der vorstehenden Ansprüche, **dadurch gekennzeichnet, dass** die wässrige Lösung des Lithiumsilicats das molare Verhältnis von SiO₂ und Li₂O im Bereich 3,5 bis 4,5 hat.

## Revendications

1. Composé pour le traitement de renforcement de surface, en particulier composé pour le traitement de renforcement résistant à l'eau de surface de béton contenant du verre liquide, **caractérisé en ce qu'**il contient de 1 à 10 % en poids de bis(γ-triéthoxysilylpropyl) - tétrasulfure, de 89,9 à 98 % en poids de solution aqueuse de silicate de lithium, et 0,1 à 1 % en poids de stabilisateur de verre liquide.

2. Composé pour le traitement de renforcement de surface selon la revendication 1, **caractérisé en ce que** les stabilisateurs du verre liquide sont des sels d'alkoxyl alkylammonium hydrophiles.

3. Composé pour le traitement de renforcement de surfaces selon l'une quelconque des revendications précédentes, car a c t é r i s é en c e que la solution aqueuse de silicate de lithium présente un rapport molaire de SiO₂ et Li₂O compris entre 3,5 à 4,5.
